# EUROPÄISCHE PATENTSCHRIFT

(11) **EP 1 426 616 B1**
(45) Veröffentlichungstag und Bekanntmachung des Hinweises auf die Patenterteilung: **26.07.2006**
(21) Anmeldenummer: 02027210.0
(22) Anmeldetag: 05.12.2002
(51) Int. Cl.: F03D 9/00, H02P 9/04

(54) **Netzkopplung einer Windkraftanlage**
Wind turbine grid connection
Connexion d'éolienne à un réseau électrique

(43) Veröffentlichungstag der Anmeldung: 09.06.2004
(73) Patentinhaber: Piller Power Systems GmbH, 37520 Osterode am Harz (DE)
(72) Erfinder: Engelhardt, Reinhard, 37115 Duderstadt (DE); Rosebrock, Bernd, 30938 Burgwedel (DE); Schäfer, Heiko, 45525 Hattingen (DE); Dr. Seidel Detlev, 37085 Göttingen (DE)
(74) Vertreter: Rehberg Hüppe + Partner

(56) Entgegenhaltungen:
- DE-A- 10 117 212
- DE-C- 733 223
- BRUNE C S ET AL: "EXPERIMENTAL EVALUATION OF A VARIABLE-SPEED, DOUBLY-FED WIND-POWER GENERATION SYSTEM" IEEE TRANSACTIONS ON INDUSTRY APPLICATIONS, IEEE INC. NEW YORK, US, Bd. 30, Nr. 3, 1. Mai 1994 (1994-05-01), Seiten 648-654, XP000459021 New York US ISSN: 0093-9994
- MUELLER S ET AL: "ADJUSTABLE SPEED GENERATORS FOR WIND TURBINES BASED ON DOUBLE-FED INDUCTION MACHINES AND 4-QUADRANT IGBT CONVERTERS LINKED TO THE ROTOR" CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000, CONFERENCE RECORD OF THE IEEE INDUSTRY APPLICATIONS CON, Bd. 4 OF 5. CONF. 35, 8. Oktober 2000 (2000-10-08), Seiten 2249-2254, XP001042624 ISBN: 0-7803-6402-3

## Beschreibung

Die Erfindung betrifft ein Verfahren zum Betreiben einer Windkraftanlage, mit den Merkmalen des Oberbegriffs des Patentanspruchs 1, eine Windkraftanlage mit den Merkmalen des Oberbegriffs des Patentanspruchs 7 sowie einen Aufrüstsatz für eine Windkraftanlage, mit den Merkmalen des Oberbegriffs des Patentanspruchs 9.

### STAND DER TECHNIK

Eine Vielzahl von Windkraftanlagen weist Generatoren in Form von Asynchronmaschinen auf, die vorteilhafter Weise direkt an ein Wechselstromnetz gekoppelt werden können, um elektrische Energie mit der Netzstromfrequenz dieses Wechselstromnetzes einzuspeisen. Ideale Betriebsbedingungen weisen solche Asynchronmaschinen aber nur dann auf, wenn die Generatordrehzahl innerhalb eines begrenzten Drehzahlfensters im übersynchronen Bereich zu der Netzfrequenz liegt (siche DE-A-10117212).

Bei vielen Standorte von Windkraftanlagen wird eine solche Generatordrehzahl nur über einen kleinen Teil der Betriebszeiten erreicht. Über einen viel größeren Teil der Betriebszeiten bleibt die erreichbare Generatordrehzahl viel niedriger. Um auch bei relativ niedrigen Generatordrehzahlen noch elektrische Energie gewinnen zu können, werden in bekannten Windkraftanlagen Generatoren eingesetzt, die als Asynchronmaschinen mit Polumschaltung ausgebildet sind. Durch die Polumschaltung wird ein weiterer Drehzahlbereich für die Gewinnung elektrischer Energie mit brauchbaren Wirkungsgraden bei direkter Ankopplung des Generators an das Wechselstromnetz erreicht. Gerade im Bereich geringerer Windgeschwindigkeiten schwanken die erreichbaren Generatordrehzahlen jedoch erheblich, so dass hier tatsächlich nur eine sehr geringe Ausbeute an elektrischer Energie auch mit einer Asynchronmaschine mit Polumschaltung als Generator erzielt wird, insbesondere wenn man diese Ausbeute mit den potentiell möglichen Ausbeuten auch bei diesen geringen Generatordrehzahlen vergleicht.

Es ist eine Windkraftanlage bekannt, bei der eine Asynchronmaschine als Generator nicht direkt an ein Stromnetz angekoppelt wird, das die Erregerleistung für den Generator bereitstellt und in das die gewonnene elektrische Energie eingespeist wird. Vielmehr ist hier eine auf die Nennleistung des Generators abgestimmte Wechselrichtereinrichtung in Form eines 4 Quadrantenumrichters vorgesehen, mit deren Hilfe der Generator mit einer Generatorstromfrequenz betrieben wird, die an die aktuelle Windgeschwindigkeit angepasst ist. Hiermit wird zwar eine erhöhte Energieausbeute im Bereich geringerer Windgeschwindigkeiten verglichen mit einer direkt an das Wechselstromnetz gekoppelten Asynchronmaschine als Generator erreicht, der Investitionsaufwand für eine solche Windkraftanlage ist aber unverhältnismäßig hoch, so dass die Zuwächse bei der Ausbeute diese Investitionen letztlich nicht rechtfertigen.

Ein grundsätzlich anderer Bautyp von Windkraftanlagen verwendet Generatoren, die als Synchronmaschinen oder Gleichstrommaschinen ausgebildet sind und die über ihren gesamten Leistungsbereich über eine Wechselrichtereinrichtung an das zu speisende Wechselstromnetz angekoppelt sind.

### AUFGABE DER ERFINDUNG

Der Erfindung liegt die Aufgabe zugrunde, die Energieausbeute einer Windkraftanlage mit einem als Asynchronmaschine ausgebildeten, in seinem Leistungsnennbereich mit einer festen Netzstromfrequenz eines externen Wechselstromnetz betriebenen Generator mit vertretbarem Investitionsaufwand im Bereich geringerer Windgeschwindigkeiten zu verbessern.

### LÖSUNG

Die Aufgabe der Erfindung wird erfindungsgemäß durch ein Verfahren zum Betreiben einer Windkraftanlage, mit den Merkmalen des Patentanspruchs 1, eine Windkraftanlage mit den Merkmalen des Patentanspruchs 7 und einen Aufrüstsatz für eine Windkraftanlage, mit den Merkmalen des Patentanspruchs 9 gelöst.

### BESCHREIBUNG DER ERFINDUNG

Bei der Erfindung wird zwar eine Wechselrichtereinrichtung vorgesehen. Diese wird aber nur in einem Schwachwindleistungsbereich eingesetzt. Die Wechselrichtereinrichtung muss daher nur für einen Teil der Nennleistung des Generators ausgelegt sein. Dieser Teil wird immer ≤ 50 % der Nennleistung des Generators bleiben. In der Regel reichen auch maximal 35 % der Nennleistung des Generators aus. Dies bedeutet, dass der Investitionsaufwand für die Wechselrichtereinrichtung auch nur maximal 50 bzw. 35 % des Investitionsaufwands für eine Wechselrichtereinrichtung beträgt, die für die Nennleistung des Generators ausgelegt wäre, da der Investitionsaufwand für eine Wechselrichtereinrichtung ungefähr proportional mit der Nennleistung der Wechselrichtereinrichtung ansteigt.

In dem Nennleistungsbereich oberhalb des Schwachwindleistungsbereichs wird die Wechselrichtereinrichtung erfindungsgemäß nicht genutzt. Hier wird vielmehr die den Generator ausbildende Asynchronmaschine direkt an das Wechselstromnetz gekoppelt. In dem Schwachwindleistungsbereich unterhalb des Nennleistungsbereichs des Generators jedoch wird erfindungsgemäß auf die Wechselrichtereinrichtung für die Verbindung des Generators mit dem Wechselstromnetz umgeschaltet. Damit kann in dem Schwachwindleistungsbereich der Generator mit einer von der Netzstromfrequenz abweichenden Variablen Generatorstromfrequenz betrieben werden. Dies ermöglicht es, die Generatorstromfrequenz zwecks Gewinnung von möglichst viel elektrischer Energie im Schwachwindleistungsbereich zu optimieren.

In der praktischen Umsetzung der Erfindung kann die Wechselrichtereinrichtung dann zwischen den Generator und das Wechselstromnetz geschaltet werden, wenn bei einer Asynchronmaschine mit Polumschaltung die Polumschaltung zu niedrigeren Generatordrehzahlen hin aktiviert wird. D.h., die Wechselrichtereinrichtung betreibt den Generator nach Umschaltung auf die größere Polzahl mit einer variablen Generatorstromfrequenz. Bei bestehenden Windkraftanlagen kann für das Schalten der Wechselrichtereinrichtung zwischen den Generator und das Wechselstromnetz damit unmittelbar auf die bereits erfolgende Polumschaltung zu niedrigeren Generatordrehzahlen oder zumindest das entsprechende Steuersignal zurückgegriffen werden.

Um die Generatorstromfrequenz im Schwachwindleistungsbereich zu optimieren, ist es bei der Erfindung vorgesehen, diese Generatorstromfrequenz im ersten Schritt mit dem Ziel zu variieren, die Generatordrehzahl bezüglich einer maximalen Generatorleistung für die jeweilige Schwachwindbetriebsbedingung zu optimieren.

In einem zweiten Schritt wird dann die von der Wechselrichtereinrichtung an den Generator angelegte Spannung bei fester Generatordrehzahl variiert, um einen Statorstrom des Generators bezüglich der maximalen Generatorleistung für die jeweilige Schwachwindbetriebsbedingung zu optimieren. Dabei sind mit der Änderung der Spannung verbundene Generatordrehzahländerungen ggf. zu kompensieren.

Bei hier skizzierten Optimierungsschritte können auf der Basis an sich bekannter Fuzzy-Logik umgesetzt werden, um die komplexe Kopplung der einzelnen Variablen mit relativ geringem Aufwand zu beherrschen.

Wenn eine Windkraftanlage völlig neu unter Anwendung der Erfindung konzipiert wird, kann auch darauf verzichtet werden, dass der Generator eine Asynchronmaschine mit Polumschaltung ist. Vielmehr kann ohne weiteres auf eine Asynchronmaschine mit Käfigläufer und ohne Polumschaltung, d.h. auf den einfachsten Typ von Asynchronmaschine zurückgegriffen werden. Mit Hilfe der Wechselrichtereinrichtung kann auch ohne eine Polumschaltung die Generatorstromfrequenz an die bei den jeweiligen Schwachwindbetriebsbedingungen möglichen Generatordrehzahlen so angepasst werden, dass eine hohe Energieausbeute erzielt wird. Die Polumschaltung, die ohne eine Wechselrichtereinrichtung nur ein weiteres kleines Drehzahlfenster für den Generator eröffnet, wird dann durch die Wechselrichtereinrichtung ersetzt. Der durch den Wegfall der Polumschaltung entfallende Investitionsaufwand deckt so zumindest einen Teil der zusätzlichen Investition für die Wechselrichtereinrichtung bereits beim Bau der Windkraftanlage ab.

Besonders geeignet ist die Erfindung aber auch, um bestehende, d.h. auch bereits installierte und in Betrieb befindliche Windkraftanlagen aufzurüsten. Es können anschlussfertige Aufrüstsätze bereitgestellt werden, mit denen die Windkraftanlagen für den Schwachwindbereich ertüchtigt werden. Diese Aufrüstsätze können die vorhandene Steuerung der Windkraftanlagen zur Einleitung des Schwachwindbetriebs des Generators über die Wechselrichtereinrichtung ausnutzen. Der Investitionsaufwand für einen solchen Nachrüstsatz wird an einem typischen deutschen Standort für eine Windkraftanlage mit einem relativ hohen zeitlichen Anteil an Schwachwindbetriebsphasen in typischer Weise weniger als 3 Jahren durch die zusätzlich veräußerbare elektrische Energie amortisiert.

### KURZBESCHREIBUNG DER FIGUREN

Im Folgenden wird die Erfindung anhand eines in den Figuren dargestellten bevorzugten Ausführungsbeispiels weiter erläutert und beschrieben.
- Fig. 1: zeigt ein Prinzipschaltbild einer neuen Windkraftanlage; und
- Fig. 2: zeigt den prinzipiellen Aufbau der im Schwachwindbetrieb bei der Windkraftanlage gemäß Fig. 1 zwischen den Generator und das Wechselstromnetz geschalteten Wechselrichtereinrichtung mit einer zugeordneten Fuzzy-Steuerung.

### FIGURENBESCHREIBUNG

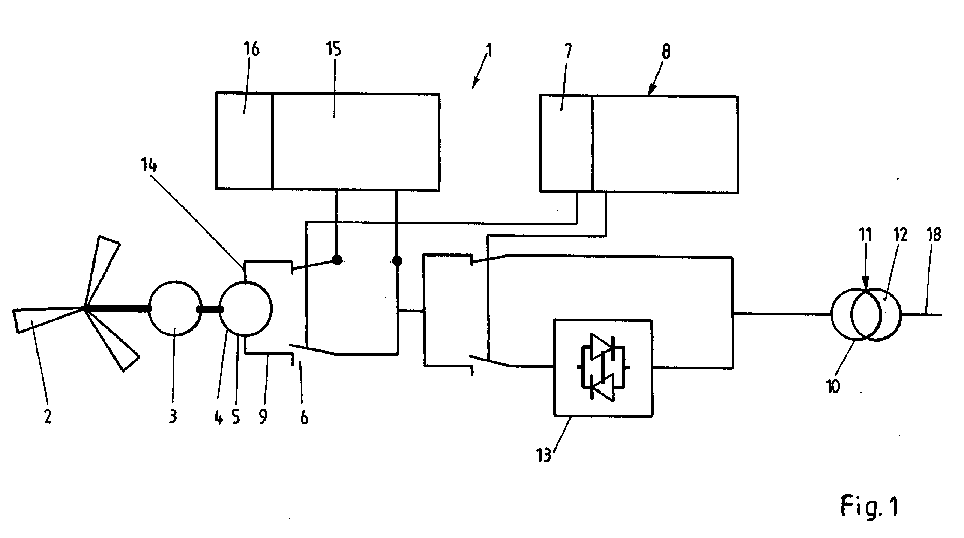

Die in Fig. 1 skizzierte Windkraftanlage 1 weist ein Windrad 2 auf, das über ein Getriebe 3 mit dem Läufer eines Generators 4 verbunden ist. Der Generator 4 ist eine Asynchronmaschine 5 mit Polumschaltung 6, um bei fester Getriebeübersetzung des Getriebes 3 zwei Drehzahlbereich für das Windrad 2 zu definieren, in dem der Generator 4 mit gutem Wirkungsgrad betrieben wird, weil die Drehzahl seines Läufers 2 in begrenztem Umfang übersynchron zu einer Generatorstromfrequenz ist, mit der der Generator 4 betrieben wird. Die Polumschaltung 6 wird von einer Schwachwindsteuerung 7, die Teil einer Steuerung 8 der Windkraftanlage 1 ist, betätigt, wenn die Drehzahl des Windrads 2 einen Grenzwert unter bzw. überschreitet. Die Steuerung 8 verbindet den Polanschluss 9 des Generators 4, der der kleineren Polzahl der Synchronmaschine 5 entspricht direkt mit einer Seite 10 eines Transformators 11, der auf seiner anderen Seite 12 mit einem externen Wechselstromnetz 18 verbunden ist. Bei Anfahren der Windkraftanlage schaltet die Steuerung 8 noch einen Thyristorsatz 13 zwischen den Generator 4 und das Wechselstromnetz 18, um dieses vor dem Eintrag von Strom- und Spannungsspitzen zu schützen. Die Verbindung des Polanschlusses 14 des Generators 4, der der höheren Polzahl der Synchronmaschine 5 entspricht, mit dem Wechselstromnetz 18 erfolgt über eine Wechselrichtereinrichtung 15 mit zugeordneter Fuzzy-Steuerung 16. Die Wechselrichtereinrichtung 15 und die Fuzzy-Steuerung 16 können auch nachgerüstet werden. Eine Vielzahl existierender Windkraftanlagen weist den in Fig. 1 geschilderten Aufbau ohne die Wechselrichtereinrichtun 15 und die Fuzzy-Steuerung 16 auf, so dass im Schwachwindbetrieb der Polanschluss 14 des Generaotrs 4 ebenfalls direkt bzw. über den Thyristorsatz 13 an den Transformator 11 angeschlossen ist.

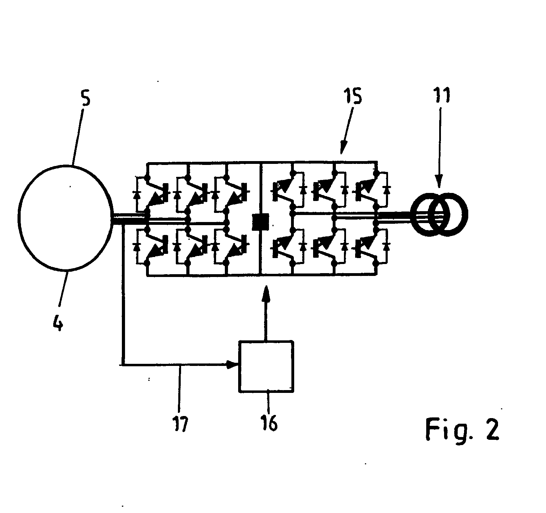

Die Wechselrichtereinrichtung zwischen dem als Asynchronmaschine 5 ausgebildeten Generator 4 und dem Transformator 11, d.h. die Schaltungsanordnung im Schwachwindbetrieb mit geringer Drehzahl des Windrads gemäß Fig. 1 ist in Fig. 2 separat dargestellt. Die Wechselrichtereinrichtung 15, bei der es sich um einen bekannten 4-Quadrantenumrichter handeln kann, richtet sowohl den zur Erregung des Generators 4 benötigten Wechselblindstrom aus dem externen Wechselstromnetz als auch den von dem Generator 4 erzeugten und in das Wechselstromnetz einzuspeisenden Leistungsstrom um. Dies ist durch die beiden Hälften der in Fig. 2 dargestellten Wechselrichtereinrichtung 15 angedeutet. Entscheidend ist, dass die Wechselrichtereinrichtung 15 für den Schwachwindbetrieb der Windkraftanlage gemäß Fig. 1 die Generatorstromfrequenz, mit der der Generator 4 betrieben wird, von der Netzstromfrequenz des externen Wechselstromnetzes entkoppelt. Damit wird es möglich, den Generator mit einer an die jeweilige Windgeschwindigkeit im Schwachwindbereich angepassten Generatorstromfrequenz zu betreiben, um auch bei relativ niedrigen Windgeschwindigkeiten und relativ niedrigen Drehzahlen des Windrads 2 gemäß Fig. 1 elektrische Energie mit gutem Wirkungsgrad zu gewinnen. Für die Optimierung der Wechselrichtereinrichtung 15 in Bezug auf die jeweiligen Schwachwindbetriebsbedingungen ist die Fuzzy-Steuerung 16 vorgesehen. Die Fuzzysteuerung 16 variiert zunächst die Generatorstromfrequenz, um die Generatordrehzahl des Generators 4 zu ermitteln, bei dem der Generator 4 unter den gegebenen Schwachwindbetriebsbedingungen das Maximum an elektrischer Energie liefert. Dann wird die Generatordrehzahl des Generators 4 festgehalten und es wird die von der Wechselrichtereinrichtung 15 an den Generator 4 angelegte Spannung variiert, um einen Statorstrom des Generators bezüglich der maximalen Generatorleistung für die jeweiligen Schwachwindbetriebsbedingung zu optimieren. Dies entspricht einer Minimierung der Summe der elektrischen und magnetischen Verlustleistung in dem Generator 4. Die Fuzzy-Steuerung 16 benötigt als Eingangssignal 17 im Wesentlichen nur die von dem Generator abgegebene elektrische Leistung. Die Änderungen der Drehzahl des Generators 4, die mit einer Änderung der bei fester Generatorstromfrequenz an den Generator 4 angelegten Spannung grundsätzlich verbunden sein kann, wird durch eine moderne Wechselrichtereinrichtung 15 automatisch zumindest soweit kompensiert, wie es für die hier beschriebene Optimierung und der Einstellung der Wechselrichtereinrichtung 15 ausreichend ist.

### BEZUGSZEICHENLISTE

- 1: Windkraftanlage
- 2: Windrad
- 3: Getriebe
- 4: Generator
- 5: Asynchronmaschine
- 6: Polumschaltung
- 7: Schwachwindsteuerung
- 8: Steuerung
- 9: Polanschluss
- 10: Transformatorseite
- 11: Transformator
- 12: Transformatorseite
- 13: Thyrisorsatz
- 14: Polanschluss
- 15: Wechselrichtereinrichtung
- 16: Fuzzy-Steuerung
- 17: Eingangssignal
- 18: Wechselstromnetz

## Patentansprüche

1. Verfahren zum Betreiben einer Windkraftanlage (1) mit einem als Asynchronmaschine (5) ausgebildeten, in seinem Nennleistungsbereich mit einer festen Netzstromfrequenz eines extemen Wechselstromnetz (18) betriebenen Generator (4), **dadurch gekennzeichnet, dass** in einem Schwachwindleistungsbereich unterhalb des Nennleistungsbereichs des Generators (4) eine Wechselrichtereinrichtung (15) zwischen den Generator (4) und das Wechselstromnetz (18) geschaltet wird, um den Generator (4) mit einer von der Netzstromfrequenz abweichenden variablen Generatorstromfrequenz zu betreiben.

2. Verfahren nach Anspruch 1, **dadurch gekennzeichnet, dass** die Wechselrichtereinrichtung (15) für maximal 50 %, insbesondere für maximal 35 % der Nennleistung des Generators (4) ausgelegt wird.

3. Verfahren nach Anspruch 1 oder 2, wobei der Generator (4) eine Asynchronmaschine (5) mit Polumschaltung (6) ist, **dadurch gekennzeichnet, dass** die Wechselrichtereinrichtung (15) zwischen den Generator (4) und das Wechselstromrietz (18) geschaltet wird, wenn die Polumschaltung (6) zu niedrigeren Generatordrehzahlen aktiviert wird.

4. Verfahren nach einem der Ansprüche 1 bis 3, **dadurch gekennzeichnet, dass** die Generatorstromfrequenz variiert wird, um eine Generatordrehzahl bezüglich einer maximalen Generatorleistung für die jeweilige Schwachwindbetriebsbedingung zu optimieren.

5. Verfahren nach Anspruch 4, **dadurch gekennzeichnet, dass** eine von der Wechselrichtereinrichtung (15) an den Generator angelegte Spannung bei fester Generatordrehzahl variiert wird, um einen Statorstrom des Generators (4) bezüglich der maximalen Generatorleistung für die jeweilige Schwachwindbetriebsbedingung zu optimieren.

6. Verfahren nach Anspruch oder 5, **dadurch gekennzeichnet, dass** die Optimierung durch Fuzzy-Logik herbeigeführt wird.

7. Windkraftanlage (1) mit einem als Asynchronmaschine (5) ausgebildeten, in seinem Nennleistungsbereich mit einer festen Netzstromfrequenz eines extemen Wechselstromnetz (18) betriebenen Generator (4), **dadurch gekennzeichnet, dass** eine Wechselrichter einrichtung (15) zwischen den Generator (4) und das Wechselstromnetz (18) schaltbar ist, um in einem Schwachwindleistungsbereich unterhalb des Nennleistungsbereichs des Generators (4) den Generator (4) mit einer von der Netzstromfrequenz abweichenden variablen Generatorstromfrequenz zu betreiben.

8. Windkraftanlage nach Anspruch 7, **dadurch gekennzeichnet, dass** der Generator (4) eine Asynchronmaschine (5) mit Käfigläufer und ohne Polumschaltung ist.

9. Aufrüstsatz für eine Windkraftantage (1), die einen als Asynchronmaschine (5) ausgebildeten, in seinem Nennleistungsbereich mit einer festen Netzstromfrequenz eines extemen Wechselstromnetz (18) betriebenen Generator (4) aufweist, **dadurch gekennzeichnet, dass** eine Wechselrichtereinrichtung (15) vorgesehen ist, die zwischen den Generator (4) und das Wechselstromnetz (18) schaltbar ist, um in einem Schwachwindleistungsbereich unterhalb des Nennleistungsbereichs des Generators (4) den Generator (4) mit einer von der Netzstromfrequenz abweichenden variablen Generatorstromfrequenz zu betreiben.

10. Windkraftanlage nach Anspruch 7 oder 8 oder Aufrüstsatz nach Anspruch 9, **dadurch gekennzeichnet, dass** die Wechselrichtereinrichtung (15) für maximal 50 %, insbesondere für maximal 35 % der Nennleistung des Generators (4) ausgelegt ist.

11. Windkraftanlage nach Anspruch 7 oder Aufrüstsatz nach Anspruch 9 oder 10, wobei der Generator (4) eine Asynchronmaschine (5) mit Polumschaltung (6) ist und wobei eine Schwachwindsteuerung (7) zum automatischen Betätigen der Polumschaltung (6) zu niedrigeren Generatordrehzahlen bei geringeren Windgeschwindigkeiten vorgesehen ist, **dadurch gekennzeichnet, dass** die Schwachwindsteuerung (8) vorgesehen ist, die Wechselrichtereinrichtung (15) zwischen den Generator (4) und das Wechselstromnetz (18) zu schalten, wenn sie die Polumschaltung (6) des Generators (4) zu niedrigeren Generatordrehzahlen betätigt.

12. Windkraftanlage nach Anspruch 7, 9 oder 10 oder Aufrüstsatz nach Anspruch 8, 9 oder 10, **dadurch gekennzeichnet, dass** eine Fuzzy-Steuerung vorgesehen ist, um die Generatorstromfrequenz und eine von der Wechselrichtereinrichtung (15) an den Generator (4) angelegte Spannung bezüglich der Generatorleistung für die jeweilige Schwachwindbetriebsbedingung zu optimieren.

## Claims

1. Method of operating a wind power station (1) having a generator (4) made as an asynchronous electric machine (5) which, within its nominal power range, is operated with a fixed current grid frequency of an external alternating current grid (18), **characterized in that**, in a low wind power range below the nominal power range of the generator (4), a converter device (15) is connected between the generator (4) and the alternating current grid (18) to operate the generator (4) with a variable generator current frequency deviating from the grid current frequency.

2. Method of claim 1, **characterized in that** the converter device (15) is designed for at maximum 50 %, particularly at maximum 35 % of the nominal power of the generator (4).

3. Method of claim 1 or 2, wherein the generator (4) is an asynchronous electric machine (5) with pole switching (6), **characterized in that** the converter device (15) is connected between the generator (4) and the alternating current grid (18), when the pole switching (6) is activated towards lower generator revolution speeds.

4. Method of claim 1 to 3, **characterized in that** the generator current frequency is varied to optimize a generator revolution speed with regard to a maximum generator power at the actual low wind operation condition.

5. Method of claim 4, **characterized in that** a voltage applied to the generator by the converter device (15) is varied at a fixed generator revolution speed to optimize a stator current of the generator (4) with regard to a maximum generator power at the actual low wind operation condition.

6. Method of claim 4 or 5, **characterized in that** the optimization is effected by fuzzy-logic.

7. Wind power station (1) having a generator (4) made as an asynchronous electric machine (5) which, in its nominal power range, is operated with a fixed grid current frequency of an external alternating current grid (18), **characterized in that** a converter device (15) is connectable between the generator (4) and the alternating current grid (18) to operate the generator (4) with a variable generator current frequency deviating from the grid current frequency in a low wind power range below the nominal power range of the generator (4).

8. Wind power station according to claim 7, **characterized in that** the generator (4) is an asynchronous electric machine (5) with cage rotor and without pole switching.

9. Upgrade kit for a wind power station (1) which has a generator (4) made as an asynchronous electric machine (5) and operated with a fixed grid current frequency of an external alternating current grid (18) in its nominal power range, **characterized in that** a converter device (15) is provided, which is connectable between the generator (7) and the alternating current grid (18) to operate the generator (4) with a variable generator current frequency deviating from the grid current frequency in a low wind power range below the nominal power range of the generator (4).

10. Wind power station according to claim 7 or 8 or upgrade kit according to claim 9, **characterized in that** the converter device (15) is designed for at maximum 50 %, particularly for at maximum 35 % of the nominal power of the generator (4).

11. Wind power station according to claim 7 or upgrade kit according to claim 9 or 10, wherein the generator (7) is an asynchronous electric machine (5) with pole switching (6), and wherein a low wind control (7) is provided for automatically operating the pole switching (6) towards lower generator revolution speeds upon lower wind velocities, **characterized in that** the low wind control (8) is provided for connecting the converter device (15) between the generator (4) and the alternating current grid (18), when it operates the pole switching (6) of the generator (4) towards lower generator revolution speeds.

12. Wind power station according to claim 7, 9 or 10 or upgrade kit according to claim 8, 9 or 10, **characterized in that** a fuzzy-control is provided to optimize the generator current frequency and a voltage applied to the generator (4) by the converter device (15) with regard to the generator power at the actual low wind operation condition.

## Revendications

1. Procédé de fonctionnement d'une éolienne (1) comportant une génératrice (4) conçue sous forme de moteur asynchrone (5) et exploitée dans sa plage de puissance de fonctionnement avec une fréquence de courant fixe d'un réseau à courant alternatif (18) externe, **caractérisé en ce que**, dans une plage de puissance par vent faible en dessous de la plage de puissance de fonctionnement de la génératrice (4), un onduleur (15) est commuté entre la génératrice (4) et le réseau à courant alternatif (18), afin de faire fonctionner la génératrice (4) avec une fréquence de courant variable, différente de la fréquence du réseau.

2. Procédé selon la revendication 1, **caractérisé en ce que** l'onduleur (15) est dimensionné pour 50 % maximum, en particulier pour 35 % maximum de la puissance de fonctionnement de la génératrice (4).

3. Procédé selon la revendication 1 ou 2, la génératrice (4) étant un moteur asynchrone (5) avec inverseur de pôle (6), **caractérisé en ce que** l'onduleur (15) est commuté entre la génératrice (4) et le réseau à courant alternatif (18) lorsque l'inverseur de pôle (6) est activé vers de plus faibles vitesses de rotation de la génératrice.

4. Procédé selon l'une quelconque des revendications 1 à 3, **caractérisé en ce que** l'on fait varier la fréquence du courant de la génératrice pour optimiser une vitesse de rotation de la génératrice par rapport à une puissance maximale de la génératrice pour la condition respective de fonctionnement par vent faible.

5. Procédé selon la revendication 4, **caractérisé en ce que** l'on fait varier une tension appliquée à la génératrice (4) par l'onduleur (15) afin d'optimiser un courant du stator de la génératrice (4) par rapport à la puissance maximale de la génératrice pour la condition respective de fonctionnement par vent faible.

6. Procédé selon la revendication ou 5, **caractérisé en ce que** l'optimisation est effectuée au moyen d'un logique floue.

7. Éolienne (1) comportant une génératrice (4) conçue sous forme de moteur asynchrone (5) et exploitée dans sa plage de puissance de fonctionnement avec une fréquence de courant fixe d'un réseau à courant alternatif (18) externe, **caractérisée en ce qu'**un onduleur (15) peut être commuté entre la génératrice (4) et le réseau à courant alternatif (18) afin que, dans une plage de puissance par vent faible en dessous de la plage de puissance de fonctionnement de la génératrice (4), la génératrice (4) fonctionne avec une fréquence de courant variable, différente de la fréquence du réseau.

8. Éolienne selon la revendication 7, **caractérisée en ce que** la génératrice (4) est un moteur asynchrone (5) avec un induit à cage d'écureuil et sans inverseur de pôle.

9. Jeu d'équipement pour une éolienne (1) qui comporte une génératrice (4) conçue sous forme de moteur asynchrone (5) et exploitée dans sa plage de puissance de fonctionnement avec une fréquence de courant fixe d'un réseau à courant alternatif (18) externe, **caractérisé en ce qu'**il est prévu un onduleur (15), qui peut être commuté entre la génératrice (4) et le réseau à courant alternatif (18), afin que, dans une plage de puissance par vent faible en dessous de la plage de puissance de fonctionnement de la génératrice (4), la génératrice (4) fonctionne avec une fréquence de courant variable, différente de la fréquence du secteur.

10. Éolienne selon la revendication 7 ou 8 ou jeu d'équipement selon la revendication 9, **caractérisés en ce que** l'onduleur (15) est dimensionné pour 50 % maximum, en particulier pour 35 % maximum de la puissance de fonctionnement de la génératrice (4).

11. Éolienne selon la revendication 7 ou jeu d'équipement selon la revendication 9 ou 10, la génératrice (4) étant un moteur asynchrone (5) avec inverseur de pôle (6) et une commande par vent faible (7) étant prévue pour activer automatiquement l'inverseur de pôle (6) vers des vitesses de rotation plus faibles de la génératrice en présence de vitesses de vent relativement faibles, **caractérisés en ce que** la commande par vent faible (8) est prévue pour commuter l'onduleur (15) entre la génératrice (4) et le réseau à courant alternatif (18) lorsque ladite commande active l'inverseur de pôle (6) de la génératrice (4) vers de plus faibles vitesses de rotation de la génératrice.

12. Éolienne selon la revendication 7, 9 ou 10 ou jeu d'équipement selon la revendication 8, 9 ou 10, **caractérisés en ce qu'**il est prévu une commande à logique floue pour optimiser la fréquence du courant de la génératrice et une tension appliquée à la génératrice (4) par l'onduleur (15) par rapport à la puissance de la génératrice pour la condition respective de fonctionnement par vent faible.
